# EUROPEAN PATENT SPECIFICATION

(11) **EP 2 824 017 B1**
(45) Date of publication and mention of the grant of the patent: **16.03.2016**
(21) Application number: 13757003.2
(22) Date of filing: 15.01.2013
(51) Int. Cl.: B62D 25/02, B60R 22/24, B62D 25/08, B60R 22/34, B60R 22/28

(54) **SEAT BELT RETRACTOR MOUNTING STRUCTURE**
MONTAGESTRUKTUR FÜR EINEN SICHERHEITSGURTAUFROLLER
STRUCTURE DE MONTAGE DE RÉTRACTEUR DE CEINTURE DE SÉCURITÉ

(30) Priority: 09.03.2012 JP 2012053476
(43) Date of publication of application: 14.01.2015
(73) Proprietor: Toyota Jidosha Kabushiki Kaisha, Toyota-shi, Aichi 471-8571 (JP)
(72) Inventor: IWANO, Yoshihiro, Toyota-shi Aichi 471-8571 (JP); ITO, Katsuyoshi, Toyota-shi Aichi 471-8571 (JP)
(74) Representative: Intès, Didier Gérard André
(86) International application number: PCT/JP2013/050591
(87) International publication number: WO 2013/132888

(56) References cited:
- JP-A- 2002 087 206
- JP-A- 2003 276 561
- JP-A- 2004 196 263
- JP-A- 2008 068 755

## Description

### Technical Field

The present invention relates to a seatbelt retractor mounting structure.

### Background Art

A structure is known in which a seatbelt retractor of a seatbelt device for a vehicle rear seat is mounted to a body panel at a vehicle body side portion via a bracket (see, for example, Patent Document 1). In such a structure, the mounting position of the seatbelt retractor and the bracket is offset, toward the vehicle transverse direction inner side, with respect to the mounting position of the body panel and the bracket. Further, when, for example, the amount of the aforementioned offset becomes great accompanying an increase in the size of the seatbelt retractor or the like, at the time when load is inputted to the seatbelt retractor, the load in the rotating direction (the rotational component) that attempts to rotate the bracket toward the vehicle transverse direction inner side with the point, at which the bracket is mounted to the body panel, being the fulcrum becomes large.

### Prior Art Documents

### Patent Documents

Patent Document 1: Japanese Patent Application Laid-Open (JP-A) No. 2009-73374

JP 2002 087 206 shows a seat belt retractor mounting structure according to the preamble of claim 1.

### SUMMARY OF INVENTION

### Technical Problem

However, in aforementioned documents, there is no mention of such an input load in the rotating direction being a problem to be solved, and there is room for betterment with regard to improving the mounting rigidity of the bracket to the body panel.

In consideration of the above-described circumstances, an object of the present invention is to provide a seatbelt retractor mounting structure that, although a structure in which load in a direction of rotating a bracket toward a vehicle transverse direction inner side is applied to the bracket at the time of input of load to a seatbelt retractor, can improve the mounting rigidity of the bracket to a vehicle body panel.

### Solution to Problem

A seatbelt retractor mounting structure relating to a first aspect of the present invention comprises: a vehicle body mounting portion that structures a portion of a bracket that mounts a seatbelt retractor to a vehicle body panel of a vehicle body side portion, and that is superposed on and mounted at the vehicle body panel; a retractor mounting portion that structures a portion of the bracket, and that is disposed further toward a vehicle transverse direction inner side than the vehicle body mounting portion, and to which the seatbelt retractor is mounted; and a bead that is formed at the bracket, and that extends substantially in a vehicle longitudinal direction adjacent to a mounting position of the vehicle body mounting portion to the vehicle body panel.

In accordance with the seatbelt retractor mounting structure relating to the first aspect of the present invention, at the bracket, the vehicle body mounting portion thereof is superposed on and mounted to a vehicle body panel of a vehicle body side portion, and a seatbelt retractor is mounted to the retractor mounting portion that is disposed further toward the vehicle transverse direction inner side than the vehicle body mounting portion. Therefore, when load is inputted from the seatbelt retractor to the retractor mounting portion, load, that attempts to rotate the bracket toward the vehicle transverse direction inner side with the side that is mounted to the vehicle body panel being the fulcrum, is applied to the bracket. Here, a bead, that extends substantially in the vehicle longitudinal direction, is formed at the bracket adjacent to the mounting position of the vehicle body mounting portion to the vehicle body panel. Therefore, even if this load is applied, bending deformation of the bracket is suppressed. Therefore, a detaching load, that is applied to the mounting position of the vehicle body mounting portion to the vehicle body panel, also is suppressed.

In the first aspect of the present invention, in the seatbelt retractor mounting structure, the vehicle body mounting portion structures an end portion at a vehicle front side of the bracket, and at least a portion of a superposed portion of the vehicle body panel on the vehicle body mounting portion is disposed at a vehicle transverse direction inner side with respect to the vehicle body mounting portion, and outlines of a vehicle rear side of the superposed portion are set substantially along a vehicle vertical direction.

In accordance with the seatbelt retractor mounting structure relating to the first aspect of the present invention, the vehicle body mounting portion structures the end portion at the vehicle front side at the bracket. Therefore, when load is inputted from the seatbelt retractor to the retractor mounting portion, load is applied to the end portion at the vehicle front side of the bracket. On the other hand, at least a portion of the superposed portion of the vehicle body panel on the vehicle body mounting portion is disposed at the vehicle transverse direction inner side with respect to the vehicle body mounting portion, and the outlines of the vehicle rear side of the superposed portion are set substantially along the vehicle vertical direction. Therefore, when load is inputted from the seatbelt retractor to the retractor mounting portion, the load, that is applied to the end portion at the vehicle front side of the bracket, attempts to bendingly deform the bracket along the outlines of the vehicle rear side of the superposed portion that is disposed at the vehicle transverse direction inner side with respect to the vehicle body mounting portion.

However, the bead, that extends substantially in the vehicle longitudinal direction, is formed at the bracket adjacent to the mounting position of the vehicle body mounting portion to the vehicle body panel. Therefore, the bead is substantially orthogonal to the outlines of the vehicle rear side of the superposed portion, and bending deformation of the bracket along the outlines of the vehicle rear side of the superposed portion is effectively suppressed.

In a second aspect of the present invention, in the seatbelt retractor mounting structure relating to the first aspect, a range of positions in the vehicle longitudinal direction at which the bead is set is made to be a range of positions that includes respective vehicle longitudinal direction positions of a mounting position of the seatbelt retractor to the retractor mounting portion and the mounting position of the vehicle body mounting portion to the vehicle body panel.

In accordance with the seatbelt retractor mounting structure relating to the second aspect of the present invention, when load is inputted from the seatbelt retractor to the retractor mounting portion, bending deformation of the bracket is suppressed by the bead between the respective vehicle longitudinal direction positions of the mounting position of the seatbelt retractor to the retractor mounting portion and the mounting position of the vehicle body mounting portion to the vehicle body panel. Therefore, a detaching load, that is applied to the mounting position of the vehicle body mounting portion to the vehicle body panel, is suppressed further.

### Advantageous Effects of Invention

As described above, the seatbelt retractor mounting structure relating to the first aspect of the present invention has the excellent effect that it can improve the mounting rigidity of the bracket to a vehicle body panel even though it is a structure in which load, in the direction of rotating the bracket toward the vehicle transverse direction inner side, is applied to the bracket at a time of input of load to the seatbelt retractor.

The seatbelt retractor mounting structure relating to the first aspect of the present invention further has the excellent effect of being able to effectively suppress bending deformation of the bracket at the time of input of load to the seatbelt retractor.

The seatbelt retractor mounting structure relating to the second aspect of the present invention has the excellent effect of being able to further suppress the detaching load that is applied to the mounting position of the bracket to the vehicle body panel at the time of input of load to the seatbelt retractor.

### BRIEF DESCRIPTION OF DRAWINGS

Fig. 1 is a perspective view showing a vehicle rear portion to which a seatbelt retractor mounting structure relating to an embodiment of the present invention is applied.
Fig. 2 is an elevation view showing the seatbelt retractor mounting structure relating to the embodiment of the present invention, in a state of being viewed from a vehicle transverse direction inner side.
Fig. 3 is an expanded sectional view showing a bracket of Fig. 2 in a state of being cut along line 3-3.
Fig. 4 is an elevation view showing the seatbelt retractor mounting structure of Fig. 2, in a deformed state at the time of a vehicle collision.
Fig. 5A is an elevation view showing the state, before a vehicle collision, of a seatbelt retractor mounting structure relating to a comparative structure, in a state of being viewed from a vehicle transverse direction inner side.
Fig. 5B is an elevation view showing a deformed state, at the time of a vehicle collision, of the seatbelt retractor mounting structure relating to the comparative structure, in a state of being viewed from the vehicle transverse direction inner side.

### DESCRIPTION OF EMBODIMENTS

### (Structure of Embodiment)

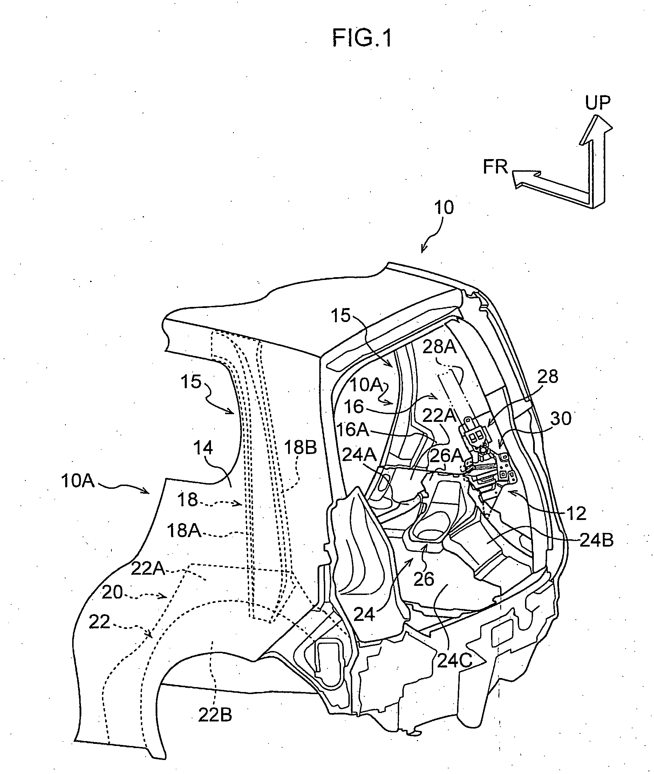

A seatbelt retractor mounting structure relating to an embodiment of the present invention is described by using Fig. 1 through Fig. 4. Note that arrow FR, that is shown appropriately in these drawings, indicates the vehicle front side, arrow UP indicates the vehicle upper side, and arrow IN indicates the vehicle transverse direction inner side.

A vehicle body rear portion 10, to which a seatbelt retractor mounting structure 12 relating to an embodiment of the present invention is applied, is shown in a perspective view in Fig. 1. As shown in Fig. 1, a side member outer panel 14 is disposed at the outermost side in the vehicle transverse direction of a vehicle body side portion 10A at the vehicle body rear portion 10. In contrast, a roof side inner panel 16 that serves as a vehicle body panel is disposed at the vehicle cabin inner side of the vehicle body side portion 10A at the vehicle body rear portion 10. The roof side inner panel 16 has a side wall portion 16A that is shaped as a vertical wall and is disposed such that the plane, that include the substantially vehicle longitudinal direction and the substantially vehicle vertical direction, is the plane direction thereof. Further, a portion of the roof side inner panel 16 structures a portion of a rear pillar 15.

A roof side outer reinforcement 18 (refer to the vehicle body left side in Fig. 1) that serves as a vehicle body panel is disposed at the vehicle transverse direction outer side of the roof side inner panel 16. The roof side outer reinforcement 18 structures a portion of the rear pillar 15, and is slightly inclined toward the vehicle front side while heating toward the vehicle upper side as seen in a vehicle side view. The cross-sectional shape, that is orthogonal to the length direction, of the roof side outer reinforcement 18 is formed in a substantial hat shape (a closed cross-sectional shape) that opens toward the vehicle transverse direction inner side. A front side flange portion 18A and a rear side flange portion 18B of the roof side outer reinforcement 18 are joined by spot welding or the like to the side wall portion 16A of the roof side inner panel 16. The upper portion (a flange portion 22A and an outer side cover portion 22B that are described later) of a wheel house outer 22 of a rear wheel house 20 is joined to the respective lower portions of the front side flange portion 18A and the rear side flange portion 18B of the roof side outer reinforcement 18.

The rear wheel house 20 is a member that covers the upper side of an unillustrated tire. The rear wheel house 20 is structured by a wheel house inner 24 (refer to the vehicle body right side in Fig. 1), that serves as a vehicle body panel and is the structural portion at the vehicle transverse direction inner side of the rear wheel house 20, and the wheel house outer 22, that serves as a vehicle body panel and is the structural portion at the vehicle transverse direction outer side of the rear wheel house 20, being joined together.

The wheel house outer 22 is a press-molded part that is formed from a single steel plate, and has the flange portion 22A that is shaped as a vertical wall, and the outer side cover portion 22B (refer to the vehicle body left side in Fig. 1) that is substantially circular arc shaped as seen in a vehicle side view. The flange portion 22A of the wheel house outer 22 is disposed such that the plane, that includes the substantially vehicle longitudinal direction and the substantially vehicle vertical direction, is the plane direction thereof. The upper end portion of the flange portion 22A is joined to the lower portion of the side wall portion 16A of the roof side inner panel 16. In contrast, the outer side cover portion 22B of the wheel house outer 22 is provided at the lower side of the flange portion 22A, and projects-out further toward the vehicle transverse direction outer side than the flange portion 22A, and is formed so as to run along the tire outer surface. The vertical cross-sectional shape, in a state of being cut along the vehicle transverse direction, of the outer side cover portion 22B is formed in a substantially circular arc shape.

The wheel house inner 24 has a flange portion 24A that is substantially semicircular arc shaped as seen in a vehicle side view, an inner side cover portion 24B, and a vertical wall portion 24C that is substantially semicircular as seen in a vehicle side view. The flange portion 24A of the wheel house inner 24 is joined to the vehicle transverse direction inner side of the flange portion 22A of the wheel house outer 22. Further, the inner side cover portion 24B extends-out from the inner peripheral side end portion of the flange portion 24A toward the vehicle transverse direction inner side, and is formed in a substantially circular arc shape as seen in a vehicle side view, and the vertical cross-sectional shape thereof, in a state of being cut along the vehicle transverse direction, is substantially circular arc shaped. The vertical wall portion 24C is formed so as to be continuous with the end portion at the vehicle transverse direction inner side of the inner side cover portion 24B.

An inner gusset 26 (also called "roof side inner reinforcement"), that serves as a vehicle body panel and is substantially hat shaped in cross-section, is disposed at the vehicle transverse direction inner side of the upper portion of the wheel house inner 24. A flange portion 26A of the inner gusset 26 is joined by spot welding or the like to the lower portion of the roof side outer reinforcement 18 (the front side flange portion 18A and the rear side flange portion 18B), the upper portion of the wheel house inner 24, and the flange portion 22A of the wheel house outer 22. The inner gusset 26, the upper portion of the wheel house inner 24, and the flange portion 22A of the wheel house outer 22 form a closed cross-section.

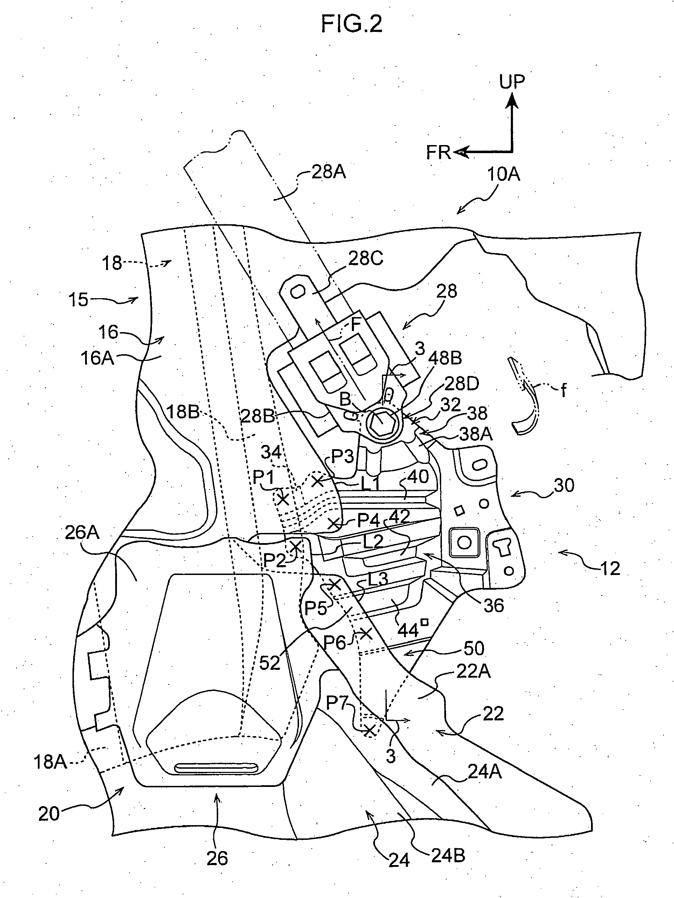

A bracket 30 is disposed further toward the vehicle rear side than the inner gusset 26. In Fig. 2, this bracket 30 and the peripheral portion thereof are shown in a state of being viewed from the vehicle transverse direction inner side. As shown in Fig. 2, the bracket 30 is a member for mounting a seatbelt retractor 28 to vehicle body panels (the roof side inner panel 16, the roof side outer reinforcement 18, the inner gusset 26, the wheel house outer 22, and the wheel house inner 24) of the vehicle body side portion 10A.

The seatbelt retractor 28 structures a portion of a seatbelt device. Concretely, the seatbelt retractor 28 has a webbing belt (seatbelt) 28A that is shaped as an elongated belt and is applied to a seated passenger, and a spool (not shown) that is tube-shaped and on which the webbing belt 28A is taken-up, and is a device that, by rotating the spool in a take-up direction, takes-up the webbing belt 28A onto the spool from the proximal end side. The axial direction of the spool is set to be a direction that is inclined toward the vehicle lower side while heading toward the vehicle front side, and the webbing belt 28A can be pulled-out obliquely toward the vehicle upper and front sides.

The seatbelt retractor 28 has a frame 28B, and has an upper side mounting piece 28C that is fixed to the frame 28B and extends-out toward the side of pulling-out the webbing belt 28A. The upper side mounting piece 28C is disposed such that the plane, that includes the substantially vehicle longitudinal direction and the substantially vehicle vertical direction, is the plane direction. The upper side mounting piece 28C is superposed on the vehicle transverse direction inner side surface of the side wall portion 16A of the roof side inner panel 16, and is joined thereto by spot welding.

Further, the seatbelt retractor 28 has a lower side mounting piece 28D that extends-out from the frame 28B toward the side opposite the upper side mounting piece 28C side. The lower side mounting piece 28D is disposed such that the plane, that includes the substantially vehicle longitudinal direction and the substantially vehicle vertical direction, is the plane direction. The lower side mounting piece 28D is superposed on and mounted to a retractor mounting portion 32 of the bracket 30 from the vehicle transverse direction inner side.

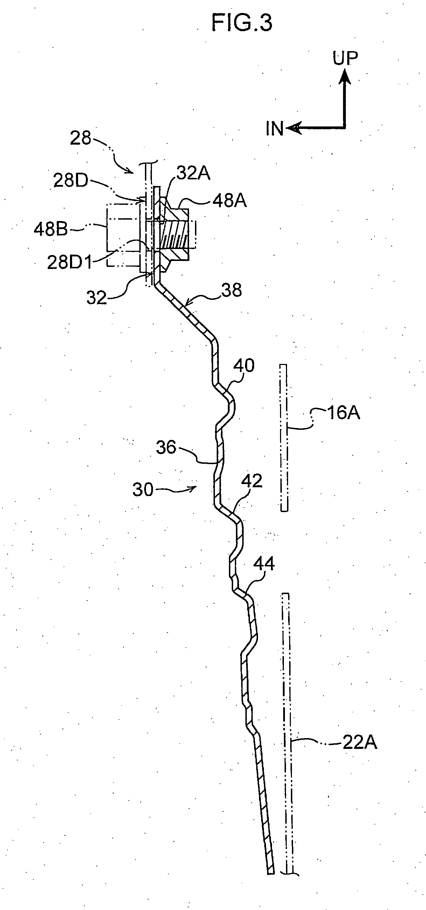

The retractor mounting portion 32 structures the upper end portion of the bracket 30. An enlarged sectional view of a state in which the bracket 30 of Fig. 2 is cut along line 3-3 is shown in Fig. 3. As shown in Fig. 3, a through-hole 32A that passes-through in the vehicle transverse direction is formed so as to pass-through the retractor mounting portion 32. Further, a weld nut 48A (an element that can be interpreted in the broad sense as a "fastener") is fixed in advance by projection welding to the outer peripheral portion of the through-hole 32A at the vehicle transverse direction outer side surface of the retractor mounting portion 32. The shaft portion of a bolt 48B (an element that can be interpreted in the broad sense as a "fastener"), that is passed-through a through-hole 28D1 of the lower side mounting piece 28D and the through-hole 32A of the retractor mounting portion 32 from the vehicle transverse direction inner side, is screwed-together with the weld nut 48A. Due thereto, the lower side mounting piece 28D of the seatbelt retractor 28 is fastened by a bolt to the retractor mounting portion 32 of the bracket 30.

As shown in Fig. 2, the end portion at the vehicle front side of the bracket 30 is made to be a vehicle body mounting portion 34 that is mounted to the vehicle body side, and the bracket 30 is mounted to the vehicle body side in a cantilevered state. Namely, the upper portion of the vehicle body mounting portion 34 is superposed in the vehicle transverse direction on the respective vehicle rear side end portions of the side wall portion 16A of the roof side inner panel 16, the rear side flange portion 18B of the roof side outer reinforcement 18, and the flange portion 26A of the inner gusset 26, and is joined (mounted) thereto by spot welding (the welding points are shown by the "X" marks). Further, the lower portion of the vehicle body mounting portion 34 is superposed in the vehicle transverse direction on the respective vehicle rear side end portions of the flange portion 22A of the wheel house outer 22 and the flange portion 24A of the wheel house inner 24, and is joined (mounted) thereto by spot welding (the welding points are shown by the "X" marks). Note that, in the following description, the objects of mounting of the vehicle body mounting portion 34 are collectively called a mounting object panel 50.

At a superposed portion 52 of the mounting object panel 50 on the vehicle body mounting portion 34, the roof side inner panel 16, the inner gusset 26, the wheel house outer 22 and the wheel house inner 24, that are a portion of the superposed portion 52, are disposed at the vehicle transverse direction inner side with respect to the vehicle body mounting portion 34, and outlines of the vehicle rear side (lines of the rear end edge) L1, L2, L3 are set substantially along the vehicle vertical direction. In the drawings, the outline of the vehicle rear side of the roof side inner panel 16 at the superposed portion 52 is denoted by reference symbol L1, the outline of the vehicle rear side of the inner gusset 26 at the superposed portion 52 is denoted by reference symbol L2, and the outline of the vehicle rear side of the wheel house outer 22 at the superposed portion 52 is denoted by reference symbol L3.

In the present embodiment, the positions, in the vehicle longitudinal direction, of the lower end of the outline L1 and the upper end of the outline L3 substantially coincide. In contrast, the outline L2 is offset further toward the vehicle front side than the lower end of the outline L1 and the upper end of the outline L3. In other words, the outlines L1, L3 other than the outline L2 are disposed such that a virtual approximate straight line that is common to the both can be drawn.

Mounting points P3, P4 of the vehicle body mounting portion 34 to the roof side inner panel 16, mounting points P5, P6 of the vehicle body mounting portion 34 to the wheel house outer 22, and mounting point P7 at the vehicle body mounting portion 34 to the wheel house outer 22 and the wheel house inner 24, are lined-up substantially in the vehicle vertical direction.

Further, a mounting point P1 at the vehicle body mounting portion 34 to the roof side inner panel 16 and the roof side outer reinforcement 18 is set substantially at the vehicle front side of the mounting point P3. At this mounting point P1 and the peripheral portion thereof, the vehicle body mounting portion 34 is disposed between the side wall portion 16A of the roof side inner panel 16 and the rear side flange portion 18B of the roof side outer reinforcement 18.

Moreover, a mounting point P2 at the vehicle body mounting portion 34 to the inner gusset 26 and the roof side outer reinforcement 18 is set at the lower side of the mounting point P1 and the vehicle front and lower side of the mounting point P4. At this mounting point P2 and the peripheral portion thereof, the vehicle body mounting portion 34 is disposed between the flange portion 26A of the inner gusset 26 and the rear side flange portion 18B of the roof side outer reinforcement 18.

The vehicle transverse direction position of the above-described retractor mounting portion 32 is offset (shifted) toward the vehicle transverse direction inner side with respect to the vehicle transverse direction position of the vehicle body mounting portion 34 (see Fig. 3). Further, at the bracket 30, a main body portion 36 and an inclined portion 38 are connected integrally to the vehicle body mounting portion 34 and the retractor mounting portion 32 that is disposed further toward the vehicle transverse direction inner side than the vehicle body mounting portion 34.

The main body portion 36 of the bracket 30 is provided at an extended position at the vehicle rear side of the vehicle body mounting portion 34. As shown in Fig. 3, the inclined portion 38 connects the upper end of the main body portion 36 and the lower end of the retractor mounting portion 32, and is inclined toward the vehicle transverse direction inner side while heading toward the vehicle upper side. Note that, as shown in Fig. 2, a bead portion 38A for reinforcement is formed at the inclined portion 38 along the direction of inclination of the inclined portion 38.

On the other hand, plural (three in the present embodiment) beads 40, 42, 44, that extend substantially in the vehicle longitudinal direction, are formed at the main body portion 36 of the bracket 30. These beads 40, 42, 44 are formed in shapes that are convex toward the vehicle transverse direction outer side.

The uppermost bead 40 among the three beads 40, 42, 44 that are lined-up vertically is adjacent to the mounting points P1, P2, P3, P4 (mounting positions) to the mounting object panel 50 at the vehicle body mounting portion 34 as seen in a vehicle side view, and extends from the main body portion 36 to the vehicle body mounting portion 34. The vehicle longitudinal direction position that is the final end at the vehicle rear side of the bead 40 is set further toward the vehicle rear side than the vehicle longitudinal direction position of a bolt fastening point B of the seatbelt retractor 28 to the retractor mounting portion 32. Further, the end portion at the vehicle front side of the bead 40 extends so as to pass between the mounting points P3, P4 that are lined-up vertically. The vehicle longitudinal direction position at the final end at the vehicle front side of the bead 40 is set so as to substantially coincide with the vehicle longitudinal direction positions at the mounting points P1, P2, further toward the vehicle front side than the vehicle longitudinal direction positions of the mounting points P3, P4.

In other words, the range of the positions in the vehicle longitudinal direction in which the bead 40 is set is made to be a range of positions that includes the respective vehicle longitudinal direction positions of the mounting position of the seatbelt retractor 28 to the retractor mounting portion 32 (refer to the bolt fastening point B) and the mounting positions of the vehicle body mounting portion 34 to the mounting object panel 50 (the positions of all of the mounting points P1 through P7).

The middle bead 42 among the three beads 40, 42, 44 that are lined-up vertically is adjacent to the lower side of the mounting point P4 (mounting position) of the vehicle body mounting portion 34 to the mounting object panel 50 as seen in a vehicle side view, and is adjacent to the upper side of the mounting point P5 (mounting position) of the vehicle body mounting portion 34 to the mounting object panel 50. Note that this bead 42 does not extend to the vehicle body mounting portion 34. The vehicle longitudinal direction position at the final end at the vehicle rear side of the bead 42 is set further toward the vehicle rear side than the vehicle longitudinal direction position of the bolt fastening point B of the seatbelt retractor 28 to the retractor mounting portion 32.

The lowest bead 44 among the three beads 40, 42, 44 that are lined-up vertically is adjacent to the mounting points P5, P6 (mounting positions) of the vehicle body mounting portion 34 to the mounting object panel 50 as seen in a vehicle side view, and extends from the main body portion 36 to the vehicle body mounting portion 34. The vehicle longitudinal direction position of the final end at the vehicle rear side of the bead 44 is set further toward the vehicle rear side than the vehicle longitudinal direction position of the bolt fastening point B of the seatbelt retractor 28 to the retractor mounting portion 32. Further, the end portion at the vehicle front side of the bead 44 reaches to between the mounting points P5, P6 that are lined-up vertically. In more detail, the vehicle longitudinal direction position of the final end at the vehicle front side of the bead 44 coincides with the vehicle longitudinal direction position of the mounting point P5, and is set to be slightly further toward the vehicle front side than the mounting point P6.

In other words, the range of the positions in the vehicle longitudinal direction in which the bead 44 is set is made to be a range of positions that includes the respective vehicle longitudinal direction positions of the mounting position of the seatbelt retractor 28 to the retractor mounting portion 32 (refer to the bolt fastening point B), and any of the mounting positions of the vehicle body mounting portion 34 to the mounting object panel 50 (the positions of some of the mounting points P4 through P7).

### (Operation/Effects of Embodiment)

The operation and effects of the above-described embodiment are described next.

In the seatbelt retractor mounting structure 12 relating to the present embodiment, at the bracket 30, the vehicle body mounting portion 34 thereof is superposed with and mounted to the mounting object panel 50 at the vehicle body side, and the seatbelt retractor 28 is mounted to the retractor mounting portion 32 that is disposed further toward the vehicle transverse direction inner side than the vehicle body mounting portion 34. Therefore, when load F, that is diagonally toward the vehicle upper and front sides, is inputted from the seatbelt retractor 28 to the retractor mounting portion 32 at the time of a vehicle collision or the like, load f, that attempts to rotate the bracket 30 toward the vehicle transverse direction side with the side that is mounted to the mounting object panel 50 being the fulcrum, is applied to the bracket 30.

Here, supplemental explanation is given of the load f that attempts to rotate the bracket 30. When, in order to improve the safety performance, a pretensioner function that works at the time of an emergency of the vehicle is provided at the seatbelt retractor 28, or various types of functions are added, the seatbelt retractor 28 becomes large. When the seatbelt retractor 28 becomes large, the amount of offset, in the vehicle transverse direction, between the mounting position of the seatbelt retractor 28 to the bracket 30 and the mounting positions of the bracket 30 to the mounting object panel 50 becomes large. Therefore, at the time of input of the load F to the seatbelt retractor 28, shearing load in the vehicle longitudinal direction is applied between the vehicle body mounting portion 34 of the bracket 30 and the mounting object panel 50 at the vehicle body side, and the load f in the rotating direction, that attempts to rotate the bracket 30 toward the vehicle transverse direction inner side, becomes large.

By the way, in the present embodiment, the vehicle body mounting portion 34 structures the end portion at the vehicle front side of the bracket 30. Therefore, when the load F is inputted from the seatbelt retractor 28 to the retractor mounting portion 32, the load f is applied to the end portion at the vehicle front side of the bracket 30. On the other hand, a portion of the superposed portion 52, that is superposed on the vehicle body mounting portion 34, at the mounting object panel 50 that is at the vehicle body side is disposed at the vehicle transverse direction inner side with respect to the vehicle body mounting portion 34, and the outlines L1, L2, L3 of the vehicle rear side are set substantially along the vehicle vertical direction. Therefore, when the load F is inputted from the seatbelt retractor 28 to the retractor mounting portion 32, the load f, that is applied to the end portion at the vehicle front side of the bracket 30, attempts to bendingly deform the bracket 30 along the outlines (mainly the outlines L1, L3) of the vehicle rear side of the superposed portion 52 that is disposed at the vehicle transverse direction inner side with respect to the vehicle body mounting portion 34.

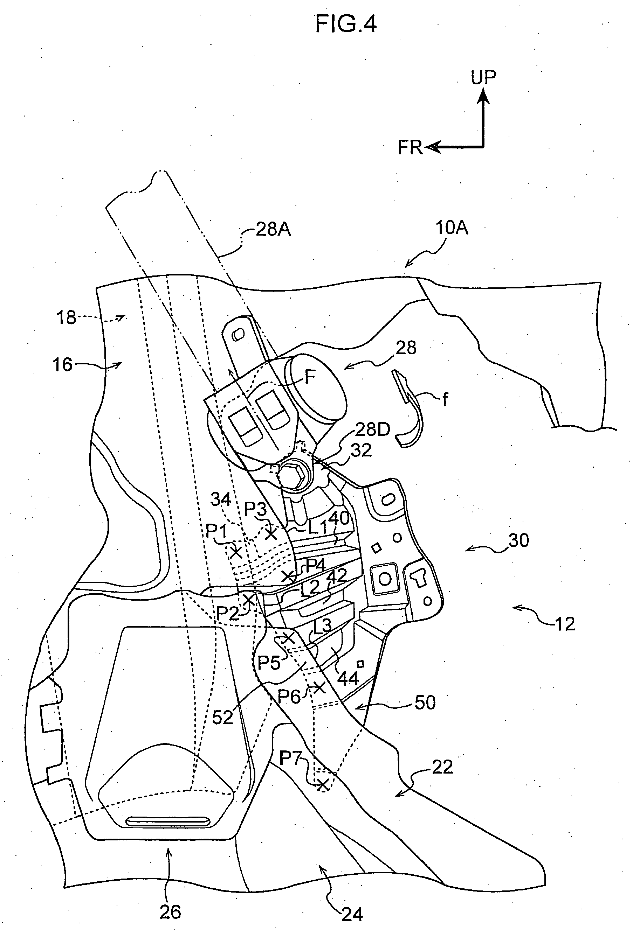

In regard to this, in the present embodiment, the beads 40, 42, 44, that extend substantially in the vehicle longitudinal direction, are formed at the bracket 30 adjacent to any of the mounting points P1 through P7 (mounting positions) of the vehicle body mounting portion 34 to the mounting object panel 50. Therefore, as shown in Fig. 4, even if the load f is applied, the bending deformation of the bracket 30 is suppressed. In addition, in the present embodiment, as shown in Fig. 2, the beads 40, 42, 44 extend substantially in the vehicle longitudinal direction and are substantially orthogonal to the outlines L1, L2, L3 of the vehicle rear side of the superposed portion 52. Therefore, bending deformation of the bracket 30 along the outlines L1, L2, L3 of the vehicle rear side of the superposed portion 52 is effectively suppressed. Thus, the detaching load, that is applied at the mounting points P1 through P7 (joined welding points) of the vehicle body mounting portion 34 to the mounting object panel 50, also is suppressed.

Further, the range of positions in the vehicle longitudinal direction in which the beads 40, 44 are set is made to be a range of positions that includes the respective longitudinal direction positions of the mounting position of the seatbelt retractor 28 to the retractor mounting portion 32 and mounting positions of the vehicle body mounting portion 34 to the mounting object panel 50. Accordingly, when the load F is inputted from the seatbelt retractor 28 to the retractor mounting portion 32, bending deformation of the bracket 30 is suppressed between the respective vehicle longitudinal direction positions of the mounting position of the seatbelt retractor 28 to the retractor mounting portion 32 and mounting positions of the vehicle body mounting portion 34 to the mounting object panel 50 (see Fig. 4). Therefore, the detaching load, that is applied to the mounting points P1 through P7 of the vehicle body mounting portion 34 to the mounting object panel 50, is suppressed further.

Further, due to the beads 40, 42, 44 being formed at the bracket 30, deformation of the bracket 30 is suppressed even with respect to shearing load in the vehicle longitudinal direction that is applied between the vehicle body mounting portion 34 of the bracket 30 and the mounting object panel 50 at the vehicle body side.

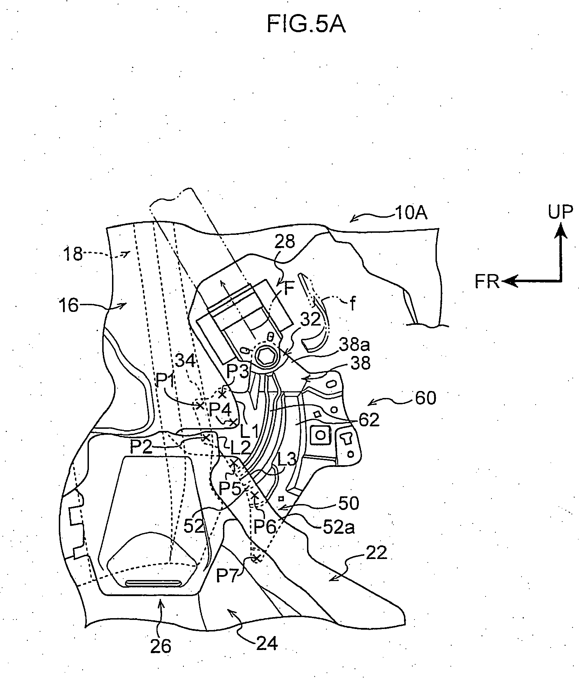

Supplementary explanation is given next while comparing with a comparative structure. A seatbelt retractor mounting structure relating to a comparative structure is shown in Fig. 5A. This comparative structure is a structure that is similar to the above-described embodiment except for the point that beads 62 that are formed at a bracket 60 extend substantially in the vehicle vertical direction, and the point that the seatbelt retractor 28 does not have the upper side mounting piece 28C (see Fig. 2). Accordingly, in this comparative structure, structural portions that are similar to the above-described embodiment are denoted by the same reference numerals, and description thereof is omitted.

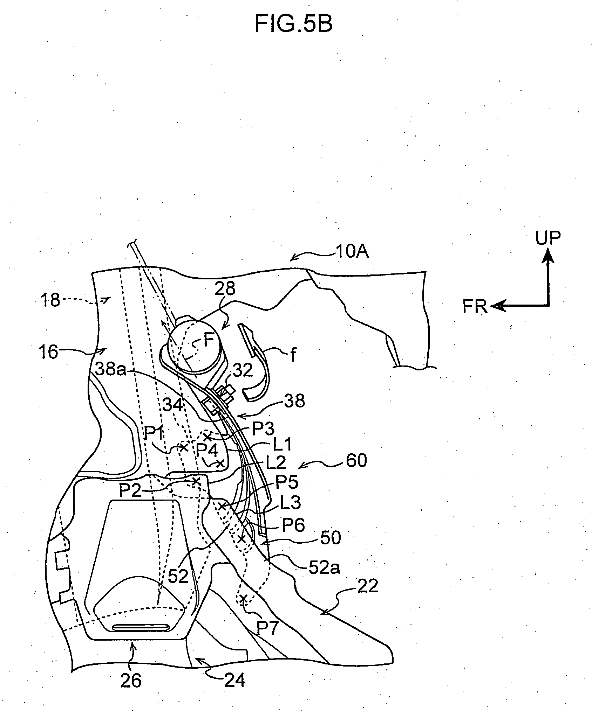

In this comparative structure, the beads 62 extend substantially in the vehicle vertical direction. Therefore, when the load F that is diagonally toward the vehicle upper and front sides is inputted from the seatbelt retractor 28 to the retractor mounting portion 32 and the load f that attempts to rotate the bracket 60 toward the vehicle transverse direction inner side is applied, as shown in Fig. 5B, the bracket 60 bendingly deforms (approximately 90° in Fig. 5B) along the outlines L1, L3 of the vehicle rear side of the superposed portion 52. Further, at this time, the plastic strain ratio is relatively large at an end portion 38a at the vehicle rear side of the inclined portion 38, and an intersection portion 52a of the lower rear end of the main body portion 36 and the outline L3 of the vehicle rear side of the superposed portion 52.

In contrast, as shown in Fig. 4, in the seatbelt retractor mounting structure 12 relating to the present embodiment, when the load F that is diagonally toward the vehicle upper and front sides is inputted from the seatbelt retractor 28 to the retractor mounting portion 32, the amount of bending deformation of the bracket 30 along the outlines L1, L2, L3 of the vehicle rear side of the superposed portion 52 is suppressed. Further, the plastic strain ratio also is suppressed overall.

As described above, although the seatbelt retractor mounting structure 12 relating to the present embodiment is a structure in which the load f, that is in the direction of rotating the bracket 30 toward the vehicle transverse direction inner side, is applied to the bracket 30 at the time of input of the load F to the seatbelt retractor 28, the seatbelt retractor mounting structure 12 can improve the mounting rigidity of the bracket 30 with respect to the mounting object panel 50.

### (Supplemental Description of Embodiment)

Note that, in the above-described embodiment, the three beads 40, 42, 44 are formed at the bracket 30 illustrated in Fig. 2. However, the number of beads that are formed at the bracket can be made to be one, two or four or more. By the way, it is preferable that the beads that are formed at the bracket be made to respectively correspond to the mounting points of the vehicle body mounting portion and the vehicle body panel (the spot welding points in the above-described embodiment), and it is preferable that the number of beads and the number of the mounting points be set to be equal.

Further, in the above-described embodiment, the vehicle body mounting portion 34 is joined by spot welding to the mounting object panel 50 (the vehicle body panel) of the vehicle body side portion 10A. However, the vehicle body mounting portion may be mounted to the vehicle body panel of the vehicle body side portion by arc welding or fastening by bolts or the like.

Further, in the above-described embodiment, the range of positions in the vehicle longitudinal direction in which the beads 40, 44 are set is made to be a range of positions that includes the respective vehicle longitudinal direction positions of the mounting position of the seatbelt retractor 28 to the retractor mounting portion 32 and the mounting positions of the vehicle body mounting portion 34 to the mounting object panel 50 (the vehicle body panel), and such a structure is preferable. However, the range of positions in the vehicle longitudinal direction in which the beads are set may be made to be a range of positions that does not include the vehicle longitudinal direction position of the mounting point of the seatbelt retractor (28) to the retractor mounting portion (32), or may be made to be a range of positions that does not include the vehicle longitudinal direction positions of the mounting points of the vehicle body mounting portion (34) to the mounting object panel (50).

Note that the concept of "a range of positions that includes respective vehicle longitudinal direction positions of a mounting position of the seatbelt retractor to the retractor mounting portion and the mounting position of the vehicle body mounting portion to the vehicle body panel" in the second aspect of the present invention includes, in addition to "a range of positions that includes respective vehicle longitudinal direction positions of the mounting position of the seatbelt retractor 28 to the retractor mounting portion 32 and all of the positions of the mounting positions of the vehicle body mounting portion 34 to the mounting object panel 50 (vehicle body panel)", also "a range of positions that includes respective vehicle longitudinal direction positions of the mounting position of the seatbelt retractor 28 to the retractor mounting portion 32 and any position of the mounting positions of the vehicle body mounting portion 34 to the mounting object panel 50 (vehicle body panel)", as in the case of the bead 44 in the above-described embodiment.

Further, in the above-described embodiment, at the bracket 30, the end portion at the vehicle front side is made to be the vehicle body mounting portion 34, and the end portion at the vehicle upper side is made to be the retractor mounting portion 32. However, at the bracket, for example, the end portion at the vehicle upper side may be made to be the vehicle body mounting portion, and a flange portion, that is bent and extends from the lower end portion of the vehicle body mounting portion toward the vehicle transverse direction inner side, may be made to be the retractor mounting portion.

Further, in the above-described embodiment, a portion of the superposed portion 52 of the mounting object panel 50 (the vehicle body panel) on the vehicle body mounting portion 34 is disposed at the vehicle transverse direction inner side with respect to the vehicle body mounting portion 34. However, a structure is also possible in which the superposed portion of the vehicle body panel on the vehicle body mounting portion is disposed at the vehicle transverse direction outer side with respect to the vehicle body mounting portion.

Further, with regard to the "superposed portion of the vehicle body panel on the vehicle body mounting portion" in the first aspect of the present invention, a portion thereof may be disposed at the vehicle transverse direction inner side with respect to the vehicle body mounting portion 34, and the outlines L1, L2, L3 of the vehicle rear side may be set substantially along the vehicle vertical direction, as in the above-described embodiment. Or, the entire superposed portion may be disposed at the vehicle transverse direction inner side with respect to the vehicle body mounting portion, and the outlines of the vehicle rear side may be set substantially along the vehicle vertical direction.

Further, the concept of "extends substantially in a vehicle longitudinal direction" in the first aspect of the present invention includes, in addition to cases of extending in the vehicle longitudinal direction in the strict sense of the meaning, also cases in which, as in the above-described embodiment, the bead extends in a direction that is slightly inclined with respect to the vehicle longitudinal direction, but obtains substantially similar operation and effects as in the case of extending in the vehicle longitudinal direction, and is considered as extending substantially in the vehicle longitudinal direction.

Further, the concept of the "outlines of a vehicle rear side are set substantially along a vehicle vertical direction" in the first aspect of the present invention includes cases of the outlines of the vehicle rear side being set parallel to the vehicle vertical direction, and in addition, also includes cases in which, as in the above-described embodiment, the outlines L1, L2, L3 of the vehicle rear side are set in a direction that is slightly inclined with respect to the vehicle vertical direction, but obtain substantially similar operation and effects as in the case of being set parallel to the vehicle vertical direction, and are considered as being set substantially along the vehicle vertical direction.

Note that the above-described embodiment and the above-described plural modified examples can be implemented by being combined appropriately.

## Claims

1. A seatbelt retractor mounting structure (12), comprising:
a vehicle body mounting portion (34) that structures a portion of a bracket (30) that mounts a seatbelt retractor (28) to a vehicle body panel (50) of a vehicle body side portion, and that is superposed on and mounted to the vehicle body panel;
a retractor mounting portion (32) that structures a portion of the bracket (30), and that is disposed further toward a vehicle transverse direction inner side than the vehicle body mounting portion, and to which the seatbelt retractor is mounted; **characterized by**
a bead (40, 42, 44) that is formed at the bracket, and that extends substantially in a vehicle longitudinal direction adjacent to a mounting position (P1-P7) of the vehicle body mounting portion (34) to the vehicle body panel (50);
wherein
the vehicle body mounting portion (34) structures an end portion at a vehicle front side of the bracket; and
at least a portion of a superposed portion (52) of the vehicle body panel (50) on the vehicle body mounting portion (34) is disposed at a vehicle transverse direction inner side with respect to the vehicle body mounting portion, and outlines (L1,L2,L3) of a vehicle rear side of the superposed portion (52) are set substantially along a vehicle vertical direction.

2. The seatbelt retractor mounting structure according to claim 1, wherein a range of positions in the vehicle longitudinal direction at which the bead (40, 42, 44) is set is made to be a range of positions that includes respective vehicle longitudinal direction positions of a mounting position of the seatbelt retractor (28) to the retractor mounting portion (32) and the mounting position of the vehicle body mounting portion (34) to the vehicle body panel (50).

## Patentansprüche

1. Montagestruktur für einen Sicherheitsgurtaufroller (12), umfassend:
einen Fahrzeugkarosseriemontageabschnitt (34), der einen Abschnitt einer Halterung (30) ausbildet, die einen Sicherheitsgurtaufroller (28) an einer Fahrzeugkarosserieplatte (50) eines Fahrzeugkarosserieseitenabschnitts befestigt und die auf die Fahrzeugkarosserieplatte aufgesetzt und darauf montiert ist,
einen Aufrollermontageabschnitt (32), der einen Abschnitt der Halterung (30) ausbildet und der näher an einer in Fahrzeugquerrichtung innenliegenden Seite angeordnet ist als der Fahrzeugkarosseriemontageabschnitt und an dem der Sicherheitsgurtaufroller befestigt ist, **gekennzeichnet durch**
eine Sicke (40, 42, 44), die an der Halterung ausgebildet ist und sich neben einer Montagestelle (P1-P7) des Fahrzeugkarosseriemontageabschnitts (34) an der Fahrzeugkarosserieplatte (50) im Wesentlichen in eine Fahrzeuglängsrichtung erstreckt,
wobei
der Fahrzeugkarosseriemontageabschnitt (34) einen Endabschnitt an einer Fahrzeugvorderseite der Halterung ausbildet und
wenigstens ein Abschnitt eines auf dem Fahrzeugkarosseriemontageabschnitt (34) aufgesetzten Abschnitts (52) der Fahrzeugkarosserieplatte (50) in Bezug auf den Fahrzeugkarosseriemontageabschnitt an einer in Fahrzeugquerrichtung innenliegenden Seite angeordnet ist und die Umrisse (L1, L2, L3) einer Fahrzeugheckseite des aufgesetzten Abschnitts (52) im Wesentlichen entlang einer Fahrzeugvertikalrichtung vorgesehen sind.

2. Montagestruktur für einen Sicherheitsgurtaufroller nach Anspruch 1, wobei ein Bereich von Stellen in der Fahrzeuglängsrichtung, an dem die Sicke (40, 42, 44) vorgesehen ist, so vorgesehen ist, dass er ein Bereich von Stellen ist, der entsprechende Fahrzeuglängsrichtungsstellen einer Montagestelle des Sicherheitsgurtsaufrollers (28) an den Aufrollermontageabschnitt (32) und der Montagestelle des Fahrzeugkarosseriemontageabschnitts (34) an die Fahrzeugkarosserieplatte (50) umfasst.

## Revendications

1. Structure de montage de rétracteur de ceinture de sécurité (12), comportant :
une partie de montage de carrosserie de véhicule (34) qui est structurée comme une partie d'un support (30) qui fixe un rétracteur de ceinture de sécurité (28) à un panneau de carrosserie de véhicule (50) d'une partie de côté de carrosserie de véhicule, et qui est superposé au panneau de carrosserie de véhicule et monté sur celui-ci ;
une partie de montage de rétracteur (32) qui est structurée comme une partie du support (30), et qui est disposée davantage vers un côté intérieur dans une direction transversale du véhicule que la partie de montage de carrosserie de véhicule, et sur laquelle le rétracteur de ceinture de sécurité est monté ; **caractérisé par**
un bourrelet (40, 42, 44) qui est formé au niveau du support, et qui s'étend sensiblement dans une direction longitudinale de véhicule de façon adjacente à une position de montage (P1-P7) de la partie de montage de carrosserie de véhicule (34) sur panneau de carrosserie de véhicule (50) ;
dans laquelle
la partie de montage de carrosserie de véhicule (34) est structurée comme une partie d'extrémité au niveau d'un côté avant de véhicule du support ; et
au moins une partie d'une partie superposée (52) du panneau de carrosserie de véhicule (50) sur la partie de montage de carrosserie de véhicule (34) est disposée du côté intérieur dans la direction transversale du véhicule par rapport à la partie de montage de carrosserie de véhicule, et des contours (L1, L2, L3) d'un côté arrière de véhicule de la partie superposée (52) sont prévus sensiblement le long d'une direction verticale du véhicule.

2. Structure de support de rétracteur de ceinture de sécurité, selon la revendication 1, dans laquelle une plage de positions dans la direction longitudinale du véhicule au niveau de laquelle le bourrelet (40, 42, 44) est prévu est amenée à être une plage de positions qui comprend des positions de direction longitudinale de véhicule respectives d'une position de montage du rétracteur de ceinture de sécurité (28) sur la partie de montage de rétracteur (32) et de la position de montage de la partie de montage de carrosserie de véhicule (34) sur le panneau de carrosserie de véhicule (50).
